# EUROPÄISCHE PATENTSCHRIFT

(11) **EP 0 525 541 B1**
(45) Veröffentlichungstag und Bekanntmachung des Hinweises auf die Patenterteilung: **23.11.1994**
(21) Anmeldenummer: 92112217.2
(22) Anmeldetag: 17.07.1992
(51) Int. Cl.: B60Q 1/26

(54) **Kraftfahrzeugleuchte**
Vehicle light
Feu pour véhicule

(30) Priorität: 22.07.1991 DE 9109000 U
(43) Veröffentlichungstag der Anmeldung: 03.02.1993
(73) Patentinhaber: Hella KG Hueck & Co., 59552 Lippstadt (DE)
(72) Erfinder: Rehborn, Heinz, W-4780 Lippstadt (DE)

(56) Entgegenhaltungen:
- DE-A- 3 322 516
- DE-U- 8 903 289
- FR-A- 1 320 761
- US-A- 3 321 731

## Beschreibung

Die Erfindung bezieht sich auf eine Kraftfahrzeugleuchte, die versenkt in eine Karosserieöffnung einsetzbar und mit selbstrastenden Befestigungsmitteln am Rand der Karosserieöffnung festsetzbar ist, mit einem in Draufsicht gesehen länger als breit geformten Gehäuse, bestehend aus einem Bodenteil und einem Lichtscheibenteil.

Aus dem DE-GM 77 24 305 ist eine Kennzeichenleuchte für Fahrzeuge bekannt, die in einem Karosserieausschnitt einsetzbar ist. Die Kennzeichenleuchte taucht mit einem Teil ihres Gehäuses in den Karosserieausschnitt ein, während etwa die gleiche Höhe auf dem Karosserierand hochbauend aufliegt und mit den Enden der kurzen Seiten mit der Karosserie verschraubt ist. Durch die nichtbündige Auflage der Leuchte am Karosserierand, tritt eine starke Verschmutzung der Leuchte durch die am Fahrzeug auftretenden Heckwirbel auf. Diese Verschmutzung erfährt noch eine zusätzliche Unterstützung durch den hochbauenden Anteil der Leuchte. Des weiteren ist zum Ein- und Ausbau der Leuchte stets ein Werkzeug nötig, was einer schnellen Demontage beim Glühlampenwechsel hinderlich ist. Außerdem sind bei modernen Fahrzeugen aufgrund ihrer fließenden Linien in ihrer Gestaltung sichtbare Unterbrechungen in Form von Befestigungselementen sehr unerwünscht.

Es ist deshalb Aufgabe der Erfindung, eine Fahrzeugleuchte ohne sichtbare Befestigungselemente zu gestalten, die in eine Öffnung eines Karosserieteils einsetzbar ist und ohne Zuhilfenahme von Werkzeugen oder erheblicher manueller Kraftaufwendung ein- oder ausgebaut werden kann. Dabei soll sich die Leuchte harmonisch in die Karosseriefläche integrieren lassen.

Diese Aufgabe wird erfindungsgemäß durch folgende Merkmale gelöst:
- das Gehäuse liegt mit einem Teil seines äußeren Randbereiches auf dem Rand der Karosserieöffnung auf,
- der das Gehäuse unterstützende Karosserierand erstreckt sich beiderseits der längeren Mittelachse und zum größten Teil einseitig der kleinen Mittelachse des länger als breit ausgebildeten Gehäuses,
- das Gehäuse ist in der Karosserieöffnung über eine an einer seiner kurzen Seiten befindliche, durch Druck oder Zug selbsttätig lösende, federbelastete Verrastung und auf der anderen kurzen Seite durch einen die Innenkante der Karosserieöffnung hintergreifenden Nocken befestigt.

Für die übergangslose Integration der Leuchte in die Karosserie ist es besonders vorteilhaft, daß das Gehäuse mit seinem äußeren Rand in eine ihn umfassende Einsenkung des Randes der Karosserieöffnung einliegt, wobei der Lichtscheibenteil mit der Karosserie bündig abschließt. Außerdem verhindert diese Einbauweise, daß sich Ablagerungen bilden können, da keine Schmutznischen dafür vorhanden sind.

In einer weiteren vorteilhaften Ausgestaltung der Erfindung weist die selbsttätig lösende, federnde Verrastung die Form eines vom Lichtscheibenteil oder Bodenteil abragenden und den Rand der Karosserieöffnung hintergreifenden Hakens auf, dessen freies Ende sich in einer Innenkante der Karosserieöffnung abstützt. Für den Fall, daß die Verrastung einstückig angeformt ist, bringt sie minimalen Aufwand für die Fertigung mit sich, da keine Extrateile, beispielsweise Stahlfedern, eingebaut werden müssen und die Anbringung der Verrastung gleichzeitig mit dem Spritzgießvorgang vollzogen ist.

Die gleichen vorteilhaften Merkmale wie zuvor ergeben sich für den die Karosserieöffnung hintergreifenden Nocken, der ebenfalls am Gehäuseteil angeformt ist.

In einer anderen vorteilhaften Ausführung der Leuchte geht der den Gehäuseteil unterstützende Randbereich der Karosserieöffnung ein Viertel bis ein Sechstel der langen Achse über die kleine Mittelachse hinaus. Dadurch wird erreicht, daß nur die Kraft zum Lösen der Leuchte aus der Verrastung aufgewendet wird, die ein Lösen der Verrastung erfordert, aber auch ein sicherer Sitz gewährleistet ist. Durch weiteres Verlegen des Randbereiches über die kleine Mittelachse hinaus, könnte man die erforderliche Loslösekraft aus der Karosserie erhöhen, bei Verlegen in entgegengesetzter Richtung verringern. Diese Dimensionierung ist jedoch einmalig vor der Herstellung der Leuchte nach optimierten Werten festgelegt.

Die Erfindung wird nachstehend an Hand einer Zeichnung näher erläutert. Darin zeigen:
- Figur 1: einen Schnitt gemäß der kleinen Mittelachse durch die in die Karosserie eingebaute Leuchte,
- Figur 2: einen Schnitt gemäß der Linie A-A in Figur 1,
- Figur 3: eine Draufsicht auf das Lochbild der Karosserieöffnung für die Leuchte aus Figur 1 und 2,
- Figur 4: einen Schnitt entlang der kleinen Mittelachse durch die eingebaute Leuchte in einem weiteren Ausführungsbeispiel,
- Figur 5: einen Schnitt gemäß der Linie D-D in Figur 4,
- Figur 6: eine Draufsicht auf das Lochbild der Karosserieöffnung für die Leuchte aus Figur 4 und 5.

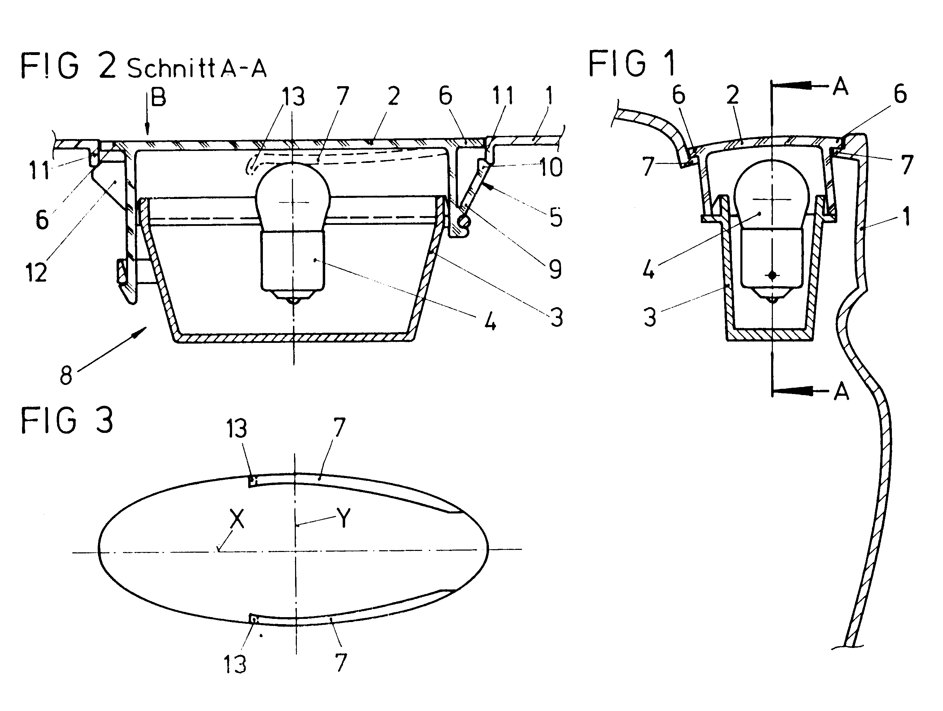

Die Leuchte aus Figur 1 bis 3, die in einer Karosserie (1) eingesetzt ist, besteht aus einem Gehäuse (8), welches sich aus einem Bodenteil (3) zur Aufnahme einer Glühlampe (4), und einem Lichtscheibenteil (2) zusammensetzt. Der Lichtscheibenteil (2) liegt mit einem Teil seines äußeren Randbereiches (6) auf dem Rand (7) der Karosserieöffnung auf. Dabei erstreckt sich der das Gehäuse (2) unterstützende Rand (7) beiderseits der längeren Mittelachse (X) und weitestgehend einseitig der kleinen Mittelachse (Y) des länger als breit ausgebildeten Gehäuses (2). Als Befestigungsmittel dient einmal die an einer kurzen Seite am Lichtscheibenteil (2) befindliche, durch Druck und/oder Zug selbsttätig sich lösende, federbelastete Verrastung (5) in Form eines am Lichtscheibenteil (2) angeformten und den Rand der Karosserieöffnung hintergreifenden Hakens (9), dessen freies Ende (10) sich an der Innenkante (11) der Karosserieöffnung abstützt. Als zweites Befestigungsmittel dient ein auf der anderen kurzen Seite die tiefliegende Innenkante (11) der Karosserieöffnung hintergreifender Nocken (12), der am Lichtscheibenteil (2) angeformt ist. Zur Entfernung der Kennzeichenleuchte aus der Karosserieöffnung wird beispielsweise mit einem Finger im Bereich des Punktes (B) Druck auf das Lichtscheibenteil (2) ausgeübt. Dadurch kann der Lichtscheibenteil (2) mit dem daran befestigten Bodenteil (3) über die abgerundeten Enden (13) abkippen. Gleichzeitig taucht der Nocken (12) unter die Innenkante (11) der Karosserieöffnung weg, und das freie Ende (10) des Hakens (9) schiebt sich unter Einfedern seitlich an der Innenkante (11) nach oben. Dabei wirkt die Strecke vom Druckpunkt (B) bis zu dem Stützpunkt der abgerundeten Enden (13) des Karosserierandes (7) als Kraftarm. Die Strecke von den abgerundeten Enden (8) bis zur Verrastung verhält sich als Lastarm in einem zweiarmigen Hebelsystem. In diesem Fall ist der Lastarm länger als der Kraftarm, was eine höhere Kraftaufwendung bezüglich der Loslösearbeit der Verrastung (5) nach sich zieht. Dies ist erforderlich, da sich die Leuchte durch unebene Fahrbahnen und daraus resultierenden Schwingungen nicht selbsttätig lösen darf.

Das Einsetzen der Leuchte in die Karosserieöffnung erfolgt in der Form, daß das Lichtscheibenteil (2) schräg über die abgerundeten Enden (13) abfallend mit dem Randbereich (6) gegen die untere Innenkante (11) der Karosserieöffnung anliegt. Der Nocken (12) hat zu diesem Zeitpunkt, noch unterhalb der Innenkante (11) liegend, mit dieser keinen Kontakt. Durch Druck auf einen Bereich zwischen Glühlampe (4) bis hin zur Verrastung (5) auf das Lichtscheibenteil (2) wird über den Drehpunkt der abgerundeten Enden (13) das Lichtscheibenteil (2) so gekippt, daß das freie Ende (10) des Hakens (9) an der Innenkante (11) der Karosserieöffnung unter stetigem Druck entlanggleitet, bis es unterhalb dieser Innenkante (11) fest fixiert ist. Mit dieser Bewegung erfolgt zur gleichen Zeit auf der gegenüberliegenden Seite ein Hochgleiten des Randbereiches (6) an der Innenkante (11), bis der Nocken (12) unterhalb der Innenkante (11) anliegt.

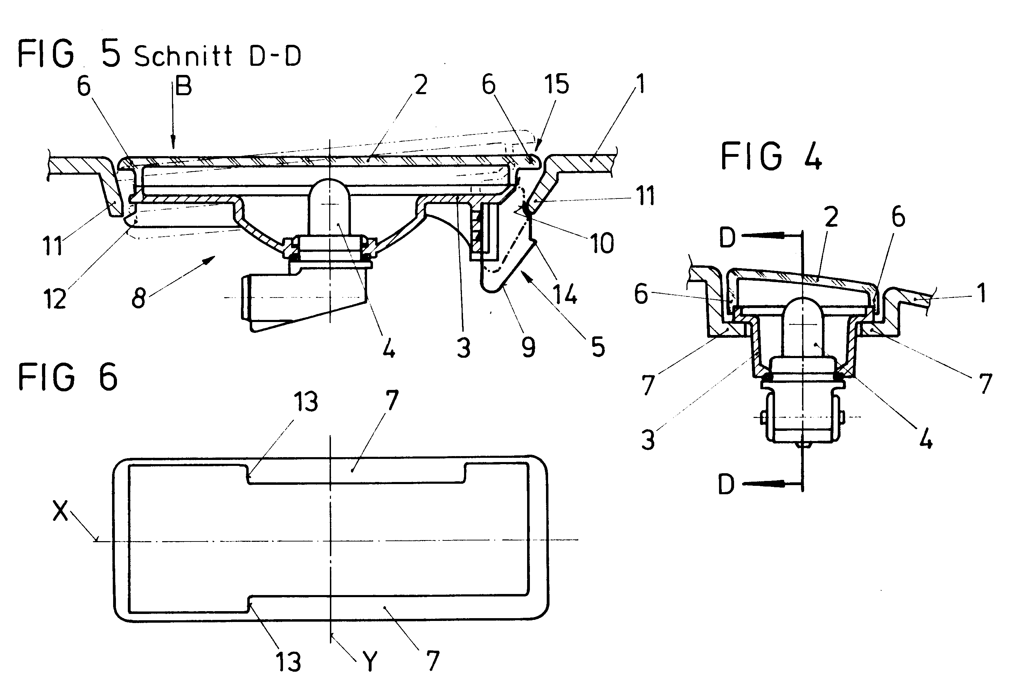

In dem in den Figuren 4 bis 6 dargestellten weiteren Ausführungsbeispiel sind für gleiche Teile auch die gleichen Bezugszahlen verwendet worden. Lediglich die Verrastung (5) in Figur 5 ersichtlich, hat zum Zweck der Diebstahlsicherung nicht nur den für seine Einbaulage endgültigen Sitz am freien Ende (10) unter der Innenkante der Karosserieöffnung (11), sondern einen weiteren Sitz an der Stufe (14). Alle Befestigungsmittel befinden sich bei diesem Ausführungsbeispiel am Bodenteil (3), welches mit dem Lichtscheibenteil (2) verschweißt oder verklebt ist. Hier gleitet unter Krafteinwirkung auf den Druckpunkt (B) das freie Ende (10) der Verrastung (5) an der Innenkante der Karosserieöffnung (11) nach oben vorbei, so daß sich die Stufe (14) unter die Innenkante der Karosserieöffnung (11) schieben kann. Die Stufe (14) ist so geformt, daß ein Hinübergleiten über die Innenkante der Karosserieöffnung (11) ohne zusätzliche Hilfe nicht möglich ist. Somit entsteht zwischen dem ehemals bündigen Abschluß zwischen Lichtscheibenteil (2) und Karosserieteil (1) ein Spalt (15) (ersichtlich zwischen gestrichelt dargestelltem Lichtscheibenteil (2) und Karosserieteil (1)), durch den ein Schraubendreher so weit gesteckt werden kann, daß das freie Ende (10) des Hakens (9) gegen die Leuchte gedrückt werden kann und somit die Stufe (14) nach oben an der Innenkante der Karosserieöffnung (11) vorbeigleitet. Erst jetzt ist ein gänzliches Entnehmen der Leuchte aus dem Karosserieteil (1) möglich. Diese Variante zur Demontage der Leuchte in zwei Schritten soll vor allem einer unbefugten Entnahme der Leuchte ohne Hilfsmittel entgegenwirken.

## Patentansprüche

1. Kraftfahrzeugleuchte, die versenkt in eine Karosserieöffnung einsetzbar und mit selbstrastenden Befestigungsmitteln am Rand der Karosserieöffnung festsetzbar ist, mit einem in Draufsicht gesehen länger als breit geformten Gehäuse (8), bestehend aus einem Bodenteil (3) und einem Lichtscheibenteil (2), gekennzeichnet durch folgende Merkmale:
a) das Gehäuse (8) liegt mit einem Teil seines äußeren Randbereiches (6) auf dem Rand (7) der Karosserieöffnung auf,
b) der das Gehäuse (8) unterstützende Rand (7) erstreckt sich beiderseits der längeren Mittelachse (X) und zum größten Teil einseitig der kleinen Mittelachse (Y) des länger als breit ausgebildeten Gehäuses (8),
c) das Gehäuse (8) ist in der Karosserieöffnung (1) über eine an einer seiner kurzen Seiten befindliche, durch Druck oder Zug selbsttätig lösende, federbelastete Verrastung (5) und auf der anderen kurzen Seite durch einen die Innenkante (11) der Karosserieöffnung hintergreifenden Nocken (12) befestigt.

2. Kraftfahrzeugleuchte nach Anspruch 1, dadurch gekennzeichnet, daß das Gehäuse (8) mit seinem äußeren Randbereich (6) in eine ihn umfassende Einsenkung des Randes der Karosserieöffnung (1) einliegt.

3. Kraftfahrzeugleuchte nach Anspruch 1 oder 2, dadurch gekennzeichnet, daß der Lichtscheibenteil (2) mit der Karosserie (1) bündig abschließt.

4. Kraftfahrzeugleuchte nach Anspruch 1, dadurch gekennzeichnet, daß die selbsttätig lösende, federnde Verrastung (5) die Form eines vom Lichtscheibenteil (2) oder Bodenteil (3) abragenden und den Rand der Karosserieöffnung hintergreifenden Hakens (9) aufweist, dessen freies Ende (10) sich an der Innenkante (11) der Karosserieöffnung abstützt.

5. Kraftfahrzeugleuchte nach Anspruch 4, dadurch gekennzeichnet, daß der Haken (9) der federnden Verrastung (5) aus Metall oder Kunststoff besteht.

6. Kraftfahrzeugleuchte nach Anspruch 5, dadurch gekennzeichnet, daß der Haken (9) der federnden Verrastung (5) am Lichtscheibenteil (2) oder Bodenteil (3) einstückig angeformt ist.

7. Kraftfahrzeugleuchte nach Anspruch 1, dadurch gekennzeichnet, daß der den Bodenteil (3) oder Lichtscheibenteil (2) unterstützende Rand (7) ein Viertel bis ein Sechstel der langen Achse (X) über die kleine Mittelachse (Y) hinausgeht.

## Claims

1. A motor vehicle lamp which can be inserted countersunk in a bodywork opening and which can be secured at the edge of the bodywork opening with self-locking fastening means, having a housing (8) which is shaped longer than it is wide as seen in plan view and which consists of a base part (3) and a lamp cover lens part (2), characterised by the following features:
a) the housing (8) rests with a part of its outer edge region (6) on the edge (7) of the bodywork opening,
b) the edge (7) supporting the housing (8) extends on both sides of the longer central axis (X) and for the most part on one side of the short central axis (Y) of the housing (8) which is constructed longer than it is wide,
c) the housing (8) is fastened in the bodywork opening (1) via a spring-loaded catch (5) which is situated on one of the short sides of the housing and which is released automatically by pressure or tension, and is fastened on the other short side by a lug (12) which engages behind the inner edge (11) of the bodywork opening.

2. A motor vehicle lamp according to claim 1, characterised in that the outer edge region (6) of the housing (8) is enclosed in a recess in the edge of the bodywork opening (1) which surrounds it.

3. A motor vehicle lamp according to claim 1 or 2, characterised in that the lamp cover lens part (2) terminates flush with the bodywork (1).

4. A motor vehicle lamp according to claim 1, characterised in that the automatically releasing, resilient catch (5) is in the form of a hook (9) projecting from the lamp cover lens part (2) or base part (3) and engaging behind the edge of the bodywork opening, the free end (10) of which hook is supported on the inner edge (11) of the bodywork opening.

5. A motor vehicle lamp according to claim 4, characterised in that the hook (9) of the resilient catch (5) consists of metal or plastic.

6. A motor vehicle lamp according to claim 5, characterised in that the hook (9) of the resilient catch (5) is integrally formed in one piece on the lamp cover lens part (2) or base part (3).

7. A motor vehicle lamp according to claim 1, characterised in that the edge (7) which supports the base part (3) or lamp cover lens part (2) goes out beyond the short central axis (Y) by a quarter to a sixth of the long axis (X).

## Revendications

1. Lampe de véhicule automobile, qui est susceptible d'être insérée, enfoncée, dans une ouverture de carrosserie et est susceptible d'être immobilisée avec des moyens de fixation auto-encliquetants au bord de l'ouverture de carrosserie, avec un boîtier (8) formé plus long que large vu en vue de dessus, consistant en une partie de fond (3) et une partie de vitre d'éclairage (2), caractérisée par des caractéristiques suivantes :
a) le boîtier (8) repose, avec une partie de sa région de bord (6) extérieure, sur le bord (7) de l'ouverture de carrosserie,
b) le bord (7) soutenant le boîtier (8) s'étend des deux côtés de l'axe médian (X) et, pour la plus grande partie, d'un côté de l'axe médian (Y), du boîtier (8) constitué plus long que large,
c) le boîtier (8) est fixé dans l'ouverture de carrosserie (1) par l'intermédiaire d'un encliquetage (5) chargé par ressort, se trouvant à l'un de ses côtés courts, libérable automatiquement par pression ou traction, et, sur l'autre côté court, par une partie en saillie (12) saisissant par derrière l'arête intérieure (11) de l'ouverture de carrosserie.

2. Lampe de véhicule automobile selon la revendication 1, caractérisée en ce que le boîtier (8) repose intérieurement, avec sa région de bord (6) extérieure, dans un renfoncement l'entourant du bord de l'ouverture de carrosserie (1).

3. Lampe de véhicule automobile selon la revendication 1 ou la revendication 2, caractérisée en ce que la partie de vitre d'éclairage (2) obture à fleur la carrosserie (1).

4. Lampe de véhicule automobile selon la revendication 1, caractérisée en ce que l'encliquetage (5) faisant ressort, se libérant automatiquement, présente la forme d'un crochet (9) faisant saillie en s'écartant de la partie de vitre d'éclairage (2) ou de la partie de fond (3) et saisissant par derrière le bord de l'ouverture de carrosserie, dont l'extrémité (10) libre s'appuie à l'arête intérieure (11) de l'ouverture de carrosserie.

5. Lampe de véhicule automobile selon la revendication 4, caractérisée en ce que le crochet (9) de l'encliquetage (5) faisant ressort consiste en du métal ou de la matière synthétique.

6. Lampe de véhicule automobile selon la revendication 5, caractérisée en ce que le crochet (9) de l'encliquetage (5) faisant ressort est conformé d'une pièce à la partie de vitre d'éclairage (2) ou à la partie de fond (3).

7. Lampe de véhicule automobile selon la revendication 1, caractérisée en ce que le bord (7), soutenant la partie de fond (3) ou la partie de vitre d'éclairage (2), dépasse d'un quart jusqu'à un sixième de l'axe (X) long au-delà de l'axe médian (Y) petit.
